# EUROPEAN PATENT SPECIFICATION

(11) **EP 1 739 987 B1**
(45) Date of publication and mention of the grant of the patent: **27.08.2014**
(21) Application number: 06012861.8
(22) Date of filing: 22.06.2006
(51) Int. Cl.: H04W 4/10, H04W 76/00

(54) **Character/data transmitting/receiving system, terminal management apparatus and character/data transmitting/receiving method used therein**
System zur Übertragung und zum Empfang von Zeichendaten, Endgerätverwaltungsvorrichtung und darin Verfahren zur Übertragung und zum Empfang von Zeichendaten
Système pour la transmission-réception de données de caractères, appareil de gestion d'un terminal et méthode pour la transmission-réception de données de caractéres

(30) Priority: 29.06.2005 JP 2005189119
(43) Date of publication of application: 03.01.2007
(73) Proprietor: NEC Corporation, Minato-ku Tokyo 108-8001 (JP)
(72) Inventor: Noriaki, Mikami, Minato-ku Tokyo (JP)
(74) Representative: Vossius & Partner

(56) References cited:
- WO-A1-02/098015
- US-A1- 2004 162 096
- US-A1- 2005 120 309

## Description

The present invention relates to a character/data transmitting/receiving system, a terminal management apparatus, and a character/data transmitting/receiving method used therein in group communication services, and more particularly to a response system using characters/data in PTT (Push-to-Talk) communication.

Conventionally, PTT communication is known as one of the broadcasting systems for providing group communication services. The PTT communication works like a "walkie talkie" utilizing IP (Internet Protocol) in which communications can travel only one-way from a talker having a speaking privilege to listeners. Also, the PTT communication, as with IM (Instant Messaging) over the Internet, allows a user to group parties with whom the user wants to talk, and to know the presence of each member, that is, whether they have logged in and are online.

In the PTT communication, a user can place a call to selected parties by opening a contact list, which is provided at the user's terminal separately from the usual phone book, selecting and determining the contacts to be called from the list, and depressing a call button. If multiple contacts are selected at that time, a multipoint call is placed. In other words, the PTT communication is a service that provides cellular phones with transceiver mode capability, and is characterized by eliminating the user having to dial the phone numbers of the other parties, taking short time to connect, and allowing the user to talk with multiple parties one another.

In the PTT communication, however, when contacting with or making an inquiry to a party, the response from the party must be received by means of voice only. Therefore, in the PTT communication, because responses are obtained from each of the other parties on a one-by-one basis, there is a problem that the more the number of participants in the call, the longer it takes to get the responses to the inquiry. Additionally, in the PTT communication, there is another problem that if an inquiry or a response is failed to be heard, more time and effort should be taken to reconfirm it. There is a further problem that more time and effort should be taken for keeping track of the response status and saving the response contents.

As an example of the technologies in the prior art with regard to such conventional PTT communication, "METHOD AND APPARATUS FOR ENABLING GROUP COMMUNICATION SERVICES IN AN EXISTING COMMUNICATION SYSTEM" is disclosed in USP 6, 928, 294 B2.

US 2004/0162096 A1 discloses a dispatch call setup method which invites required target users, and the target user is provided with the ability to accept or reject the invitation of the originating user. The dispatch call start method transmits an invite request to the target users and waits to gather call accept or reject responses from the target users for a configurable period of time. Then, it is determined whether enough target users have accepted in order to conduct the dispatch call. When enough target users accept the call, information about who has accepted, how many targets accepted the call, which specific targets accepted the call, which specific targets rejected the call, etc., is presented to the originating user. If not enough users have accepted, the process is ended.

Therefore, it is an object of the present invention to provide a character/data transmitting/receiving system, a terminal management apparatus, and a character/data transmitting/receiving method used therein, which can solve the above described problems and allow for obtaining responses from all the parties concerned at once without requesting a voice response from each of the parties.

Further, it is another object of the present invention to provide a character/data transmitting/receiving system, a terminal management apparatus, and a character/data transmitting/receiving method used therein, in which communications can be directed not to persons but to apparatuses or services deployed on a network.

These objects are achieved with the features of the claims.

Specifically, the character/data transmitting/receiving system according to the present invention consists of PTT terminals that are provided with a capability of group communication services by PTT (Push-to-Talk) communication and a terminal management apparatus that manages the PTT terminals and the general control of the communications. The PTT terminals are additionally provided with response request capability and response control communication capability, and can perform control operations corresponding to the communication protocol of the response control communication. The terminal management apparatus, upon receipt of a response request instruction from a PTT terminal via the response control communication, makes an inquiry by sending a response request inquiry via the response control communication to the other PTT terminals participating in the group communication services. The respective PTT terminals that have received the inquiry send back a response to the inquiry to the terminal management apparatus via the response control communication. The terminal management apparatus registers/updates the response status based on the responses from the respective PTT terminals, and informs the PTT terminal that has originated the response request instruction of the response status via the response control communication.

Likewise, by assigning PTT communication-capable apparatuses as the called parties of the group communication services, control for checking the status of the apparatuses can be achieved. To PTT communication-capable apparatuses furnished with status check control capability via response control communication, a status check response request is transmitted via the response control communication from a PTT terminal through a terminal management apparatus. Upon receipt of the status check response request, the PTT communication-capable apparatuses identify the status of their own and send the response content to the terminal management apparatus. After receiving the response contents from the PTT communication-capable apparatuses, the terminal management apparatus registers/updates the checking status of the apparatuses and notifies the contents to the PTT terminal that has originated the status check response request instruction. Changing the content of the control instructions and control requests in this response control communication as appropriate can cause the PTT communication-capable apparatuses to perform power on/off, diagnostics, camera operations, and any other controls and to report the results.

In this way, the character/data transmitting/receiving system according to the present invention, makes it possible to obtain responses from all the participants at once in a short time compared to the case where all the PTT terminal holders obtain a transmission privilege and respond by voice in turn on a one-by-one basis, as well as to visually identify the response status with ease.

Also, in the character/data transmitting/receiving system according to the present invention, communications for transmitting control instructions such as status check, operational instructions, etc. and receiving responses to those instructions can be carried out with apparatuses or services deployed on a network instead of persons, thereby remotely controlling the apparatuses or providing and receiving the services.

Exemplary features and advantages of the present invention will become apparent from the following detailed description when taken with the accompanying drawings inwhich:
FIG. 1 is a block diagram illustrating the configuration of a character/data transmitting/receiving system according to an embodiment of the present invention;
FIG. 2 is a block diagram illustrating the configuration of a terminal management apparatus according to a first embodiment of the present invention;
FIG. 3 is a sequence chart illustrating response status check operations for PTT communication-capable terminals in a character/data transmitting/receiving system according to the first embodiment of the present invention;
FIG. 4 is a flow chart describing operations in the terminal management apparatus according to the first embodiment of the present invention;
FIG. 5 is example screen shots of the PTT communication-capable terminals in the character/data transmitting/receiving system according to the first embodiment of the present invention;
FIG. 6 is example screen shots of the PTT communication-capable terminals in the character/data transmitting/receiving system according to the first embodiment of the present invention;
FIG. 7 is example screen shots of the PTT communication-capable terminals in the character/data transmitting/receiving system according to the first embodiment of the present invention;
FIG. 8 is example screen shots of the PTT communication-capable terminals in the character/data transmitting/receiving system according to the first embodiment of the present invention;
FIG. 9 is example screen shots of the PTT communication-capable terminals in the character/data transmitting/receiving system according to the first embodiment of the present invention;
FIG. 10 is example screen shots of the PTT communication-capable terminals in the character/data transmitting/receiving system according to the first embodiment of the present invention;
FIG. 11 is example screen shots of the PTT communication-capable terminals in the character/data transmitting/receiving system according to the first embodiment of the present invention;
FIG. 12 is a sequence chart illustrating response status check operations for PTT communication-capable terminals in a character/data transmitting/receiving system according to a second embodiment of the present invention;
FIG. 13 is a flow chart describing operations in a terminal management apparatus according to the second embodiment of the present invention;
FIG. 14 is example screen shots of the PTT communication-capable terminals in the character/data transmitting/receiving system according to the second embodiment of the present invention;
FIG. 15 is example screen shots of the PTT communication-capable terminals in the character/data transmitting/receiving system according to the second embodiment of the present invention;
FIG. 16 is a block diagram illustrating the configuration of a character/data transmitting/receiving system according to a third embodiment of the present invention;
FIG. 17 is a block diagram illustrating the configuration of a terminal management apparatus according to the third embodiment of the present invention;
FIG. 18 is a sequence chart illustrating status check operations for PTT communication-capable devices in the character/data transmitting/receiving system according to the third embodiment of the present invention;
FIG. 19 illustrates a status check operation for the PTT communication-capable devices in the character/data transmitting/receiving system according to the third embodiment of the present invention;
FIG. 20 illustrates a status check operation for the PTT communication-capable devices in the character/data transmitting/receiving system according to the third embodiment of the present invention;
FIG. 21 illustrates a status check operation for the PTT communication-capable devices in the character/data transmitting/receiving system according to the third embodiment of the present invention; and
FIG. 22 illustrates a status check operation for of the PTT communication-capable devices in the character/data transmitting/receiving system according to the third embodiment of the present invention.

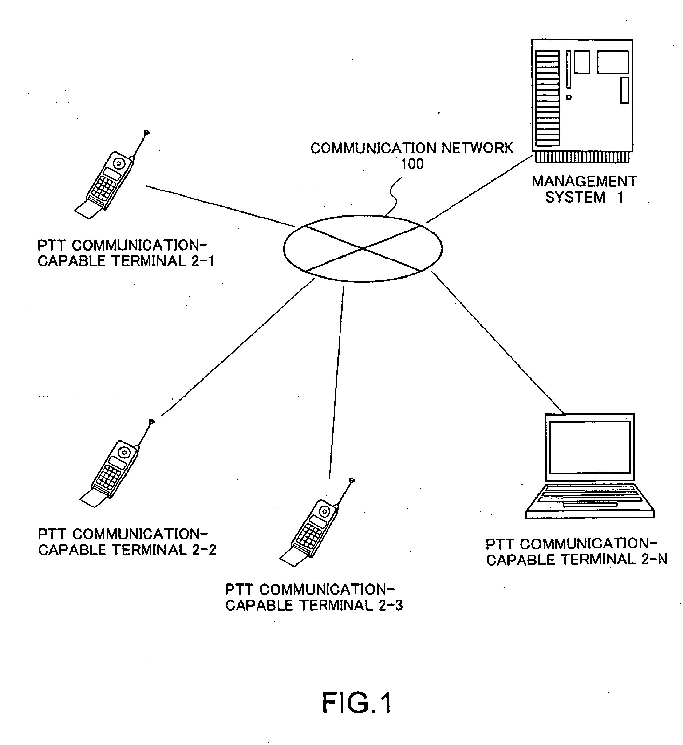

Exemplary embodiments of the present invention will now be described with reference to the drawings. FIG. 1 is a block diagram illustrating the configuration of a character/data transmitting/receiving system according to an embodiment of the present invention. In the character/data transmitting/receiving system according to the embodiment of the present invention in FIG. 1, a management system 1 and PTT (Push-to-Talk) communication-capable terminals 2-1 to 2-N are connected through a communication network 100. It should be noted that the "PTT communication-capable terminal" is referred to as a "PTT terminal" in the following description. It should also be noted that the communication network 100 is not intended to be limited to a mobile communications network, but the present invention may be applied to a fixed communications network.

The management system 1 manages the connections of the PTT terminals 2-1 to 2-N with each other and the connection status thereof. The PTT terminals 2-1 to 2-N are held by respective users who participate in the PTT communication, and connect to the terminals held by the other users to communicate with them. The PTT terminals 2-1 to 2-N can also interconnect with multiple terminals.

The PTT terminals 2-1 to 2-N associated with the character/data transmitting/receiving system according to this embodiment has response control communication capability by means of characters/data in addition to voice communication capability. The response control communication is a communication protocol used for mutual communications among the PTT terminals and the management system 1 in the PTT communication. The PTT terminals and the management system 1 are provided with control capability according to this communication protocol.

When the management system 1 receives a response request instruction via the response control communication from one of PTT terminals, it sends a response request inquiry via the response control communication to all the other PTT terminals which are connected as a group. The respective PTT terminals that have received the response request inquiry notify the management system 1 of the response content to the inquiry using characters/data via the response control communication. The management system 1 creates response status data based on the response contents sent from the respective PTT terminals and delivers the response status data to the PTT terminal that has originated the response request instruction and to the PTT terminals that has notifies the response content via the response control communication. The response status data is updated and delivered each time the response content is received from a PTT terminal until a predetermined response time limit expires. The management system 1, when the response time limit is reached, creates response status data based on all the response contents received within the response time limit and delivers it to the PTT terminal that has originated the response request instruction and to the respective PTT terminals that have notified the response content.

The response time limit can be set arbitrarily by a PTT terminal that originates a response request instruction and the remaining time of the response time limit is displayed at respective PTT terminals that have received a response request inquiry to prompt the respective PTT terminal holders to respond.

In this manner, the character/data transmitting/receiving system according to this embodiment, makes it possible to obtain responses from all the parties concerned at once in a short time compared to the conventional PTT communication in which the PTT terminal holders obtain a transmission privilege and respond by voice in turn on a one-by-one basis, as well as to visually identify the response status of the individual parties with ease.

Also, in the character/data transmitting/receiving system according to this embodiment, communications for transmitting control instructions such as status check, operational instructions and receiving responses to those instructions can be carried out with devices or services deployed on a network instead of persons, thereby remotely controlling the devices or providing and receiving the services.

A description is provided based on exemplary embodiments below.

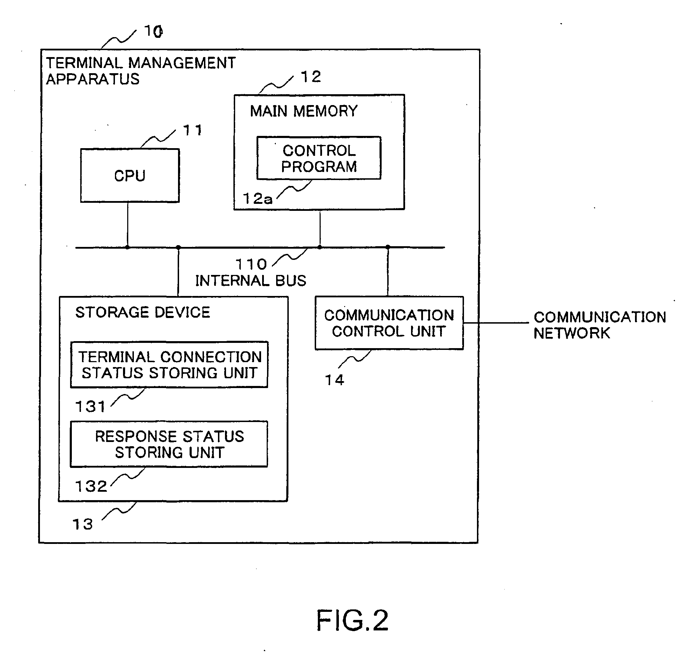

FIG. 2 is a block diagram illustrating the configuration of a terminal management apparatus according to a first embodiment of the present invention. A character/data transmitting/receiving system according to this embodiment has the same configuration as the character/data transmitting/receiving system shown in FIG. 1, and the terminal management apparatus 10 shown in FIG. 2 is provided within the management system 1 in FIG. 1.

In FIG. 2, the terminal management apparatus 10 consists of a CPU (Central Processing Unit) 11, a main memory 12 that stores a control program 12a executed by the CPU 11, a storage device 13 used by the CPU 11 as a working area for executing the control program 12a, and a communication control unit 14 that controls communications among PTT terminals 2-1 to 2-N through a communication network 100. The CPU 11, the main memory 12, the storage device 13 and the communication control unit 14 are interconnected via an internal bus 110.

The storage device 13 has a terminal connection status storing unit 131 that stores terminal connection status for managing the connections of the PTT terminals 2-1 to 2-N with each other and their connection status and a response status storing unit 132 that stores response status from the PTT terminals 2-1 to 2-N when an inquiry is made to them via the response control communication.

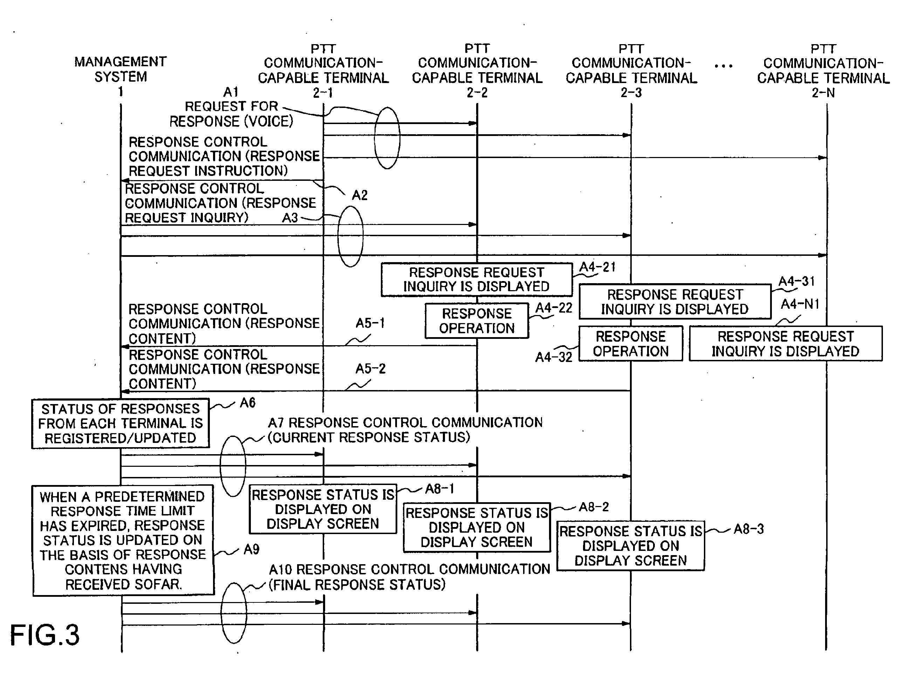

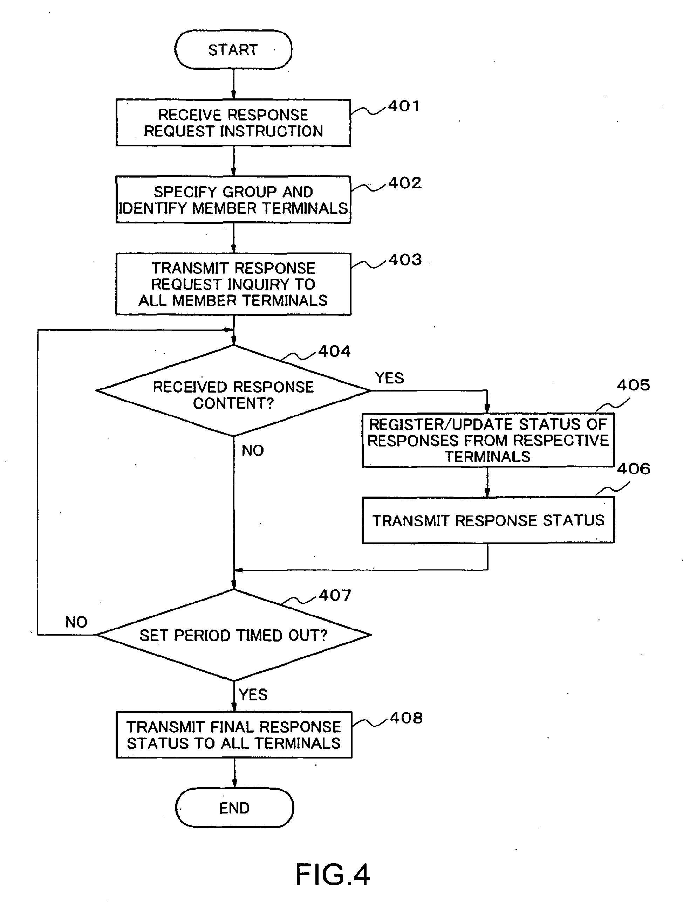

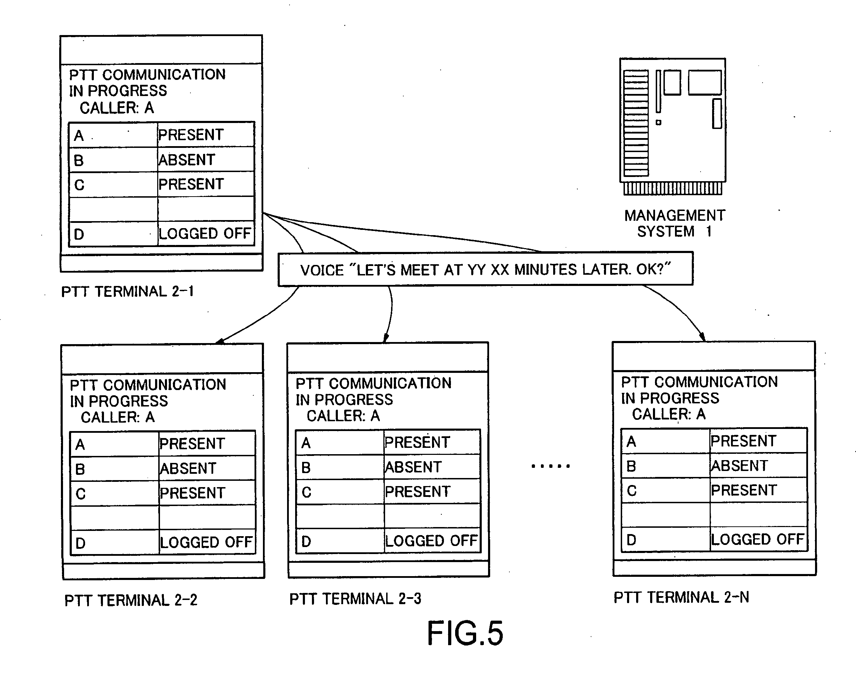

FIG. 3 is a sequence chart illustrating response status check operations for the PTT terminals 2-1 to 2-N in the character/data transmitting/receiving system according to the first embodiment of the present invention. FIG. 4 is a flow chart describing operations in the terminal management apparatus according to the first embodiment of the present invention. FIGS. 5 to 11 are example screen shots on the display units of the PTT terminals 2-1 to 2-N in the character/data transmitting/receiving system according to the first embodiment of the present invention. Reference is now made to FIGS. 1 to 11 to describe the response status check operations for the PTT terminals 2-1 to 2-N in the character/data transmitting/receiving system according to the first embodiment of the present invention. It should be noted that the operations of the management system 1 in FIGS. 3 and 4 are achieved by the CPU 11 of the terminal management apparatus 10 shown in FIG. 2 executing the control program 12a.

The PTT terminal 2-1 is connected via the management system 1 with the other PTT terminals 2-2 to 2-N. The management system 1 manages the mutual connections and the connection status of the PTT terminals 2-1 to 2-N.

The holder of the PTT terminal 2-1 who has been granted a speaking privilege communicates a request for a response to the other PTT terminals 2-2 to 2-N using a voice call (A1 in FIG. 3, FIG. 5). FIG. 5 shows an instance where the holder of the PTT terminal 2-1 is communicating to the PTT terminals 2-2 to 2-N that "he/she wants the other parties to get together XX minutes later, " and the display units of the PTT terminals 2-1 to 2-N show the presence of the PTT communication participants.

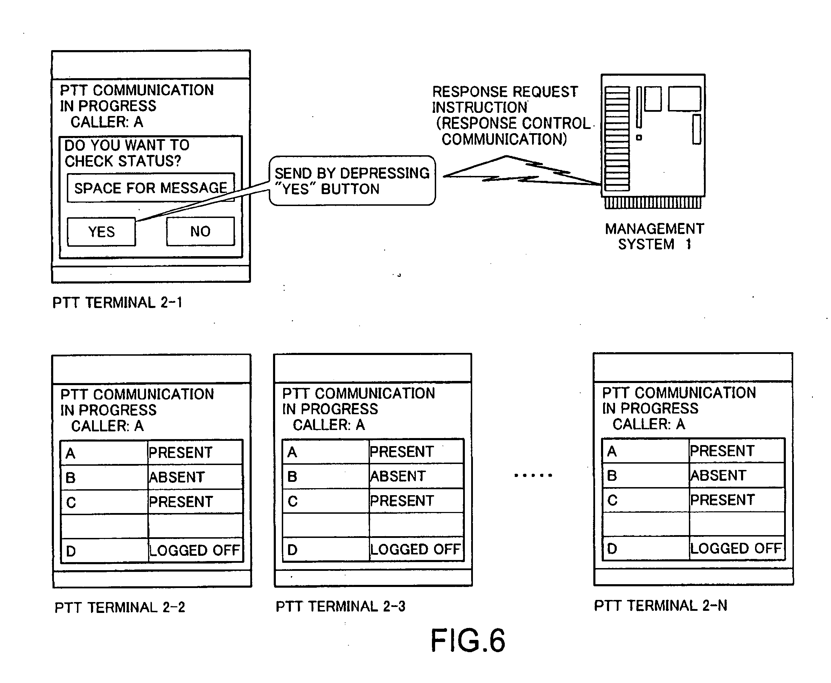

After transmitting a voice message, the holder of the PTT terminal 2-1 operates the PTT terminal 2-1 to send a response request instruction via the response control communication to the management system 1 in order to instruct the management system 1 to send a response request inquiry for a response to the PTT terminals 2-2 to 2-N (A2 in FIG. 3, FIG. 6). FIG. 6 shows an instance where the holder of the PTT terminal 2-1 is sending a response request instruction by depressing a "YES" button in response to a message prompting him/her as to whether or not to execute the response control communication displayed on the terminal at the PTT terminal 2-1.

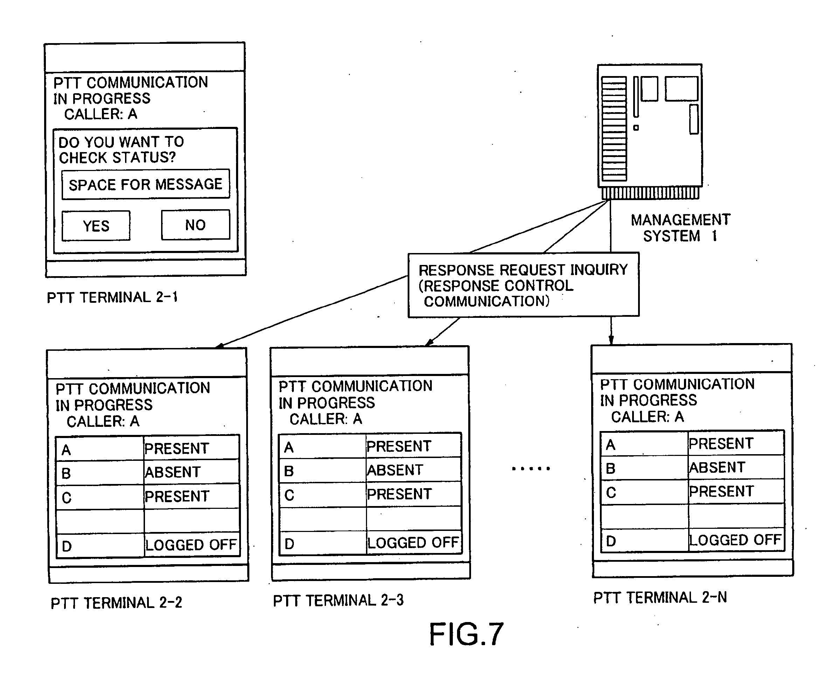

The management system 1, after receiving the response request instruction from the PTT terminal 2-1, refers to the terminal connection status storing unit 131 within the management system for extracting PTT communication connection information associated with the PTT terminal 2-1. Then the management system 1 specifies a group in communication with the PTT terminal 2-1 and identifies the PTT terminals belonging to the group concerned (401, 402 in FIG. 4). Then the management system 1 sends a response request inquiry to the identified PTT terminals 2-2 to 2-N via the response control communication (A3 in FIG. 3, 403 in FIG. 4, FIG. 7). FIG. 7 shows an instance where the management system 1 is sending a response request inquiry to the PTT terminals 2-2 to 2-N.

Then the management system 1 goes into a state where it waits for response contents in response to the response request inquiry to come from the respective PTT terminals. Also, the above described response request instruction and the response request inquiry are communicated with a notification of a response time limit arbitrarily set by the holder of the PTT terminal 2-1. The response time limit is a time limit within which respective PTT terminals that have received a response request inquiry are allowed to respond, and helps prompt for a response to the response request inquiry.

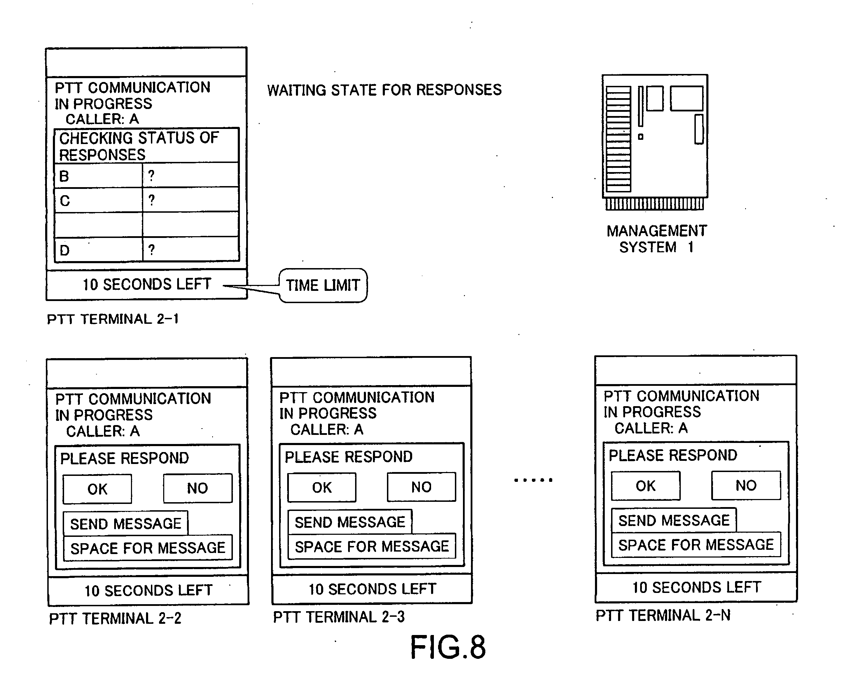

The PTT terminals 2-2 to 2-N that have received the response request inquiry via the response control communication show on their display unit that a response request inquiry has been received (A4-21, A4-31, ..., A4-N1 in FIG. 3, and FIG. 8), and prompt the holder of the terminal to respond within the time limit. FIG. 8 shows example screen shots displayed at the respective PTT terminals while waiting for the response contents to be sent. The screen of the PTT terminal 2-1 that has originated the response request instruction shows the checking status of the responses with an indication of the remaining time of the response time limit, while the screens of the respective PTT terminals 2-2 to 2-N that have received the response request inquiry show a response content entry display with an indication of the remaining time of the response time limit.

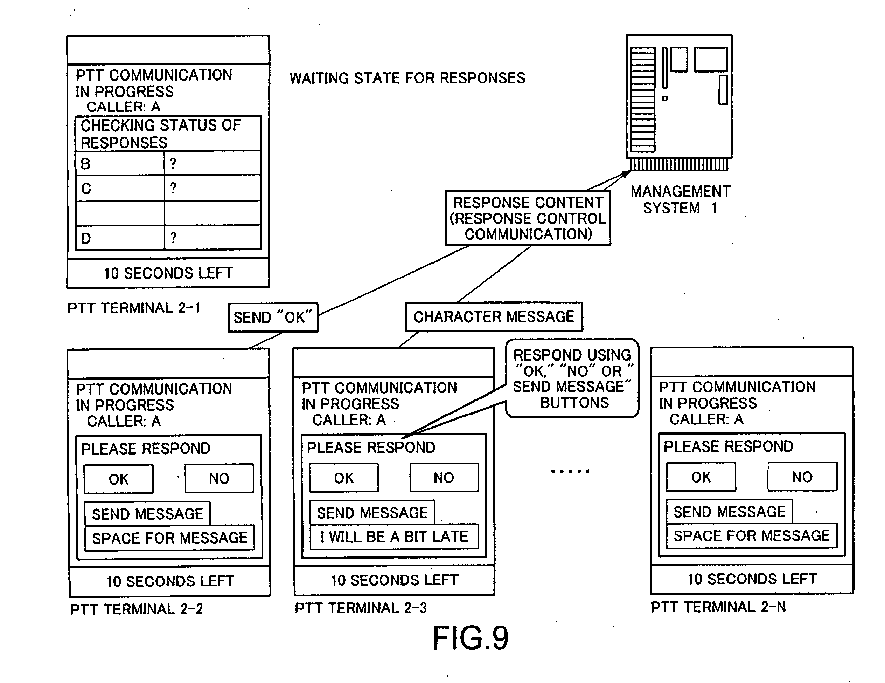

The holder of the PTT terminal 2-2 performs a response operation (A4-22 in FIG. 3) to send a response control communication containing the response content to the management system 1 (A5-1 in FIG. 3, FIG. 9). The holder of the PTT terminal 2-3 enters a character message in response (A4-32 in FIG. 3) and sends a response control communication containing the character message to the management system 1 (A5-2 in FIG. 3, FIG. 9). FIG. 9 shows an instance where the holder of the PTT terminal 2-2 who has received the response request inquiry is sending a response content informing that he/she accepts the request to "get together XX minutes later" from the response request sender by depressing an "OK" button, while the holder of the PTT terminal 2-3 is entering a character message telling that "he/she will be late for the meeting" and sending the response content using a message transmission function in response to the inquiry of the response request sender.

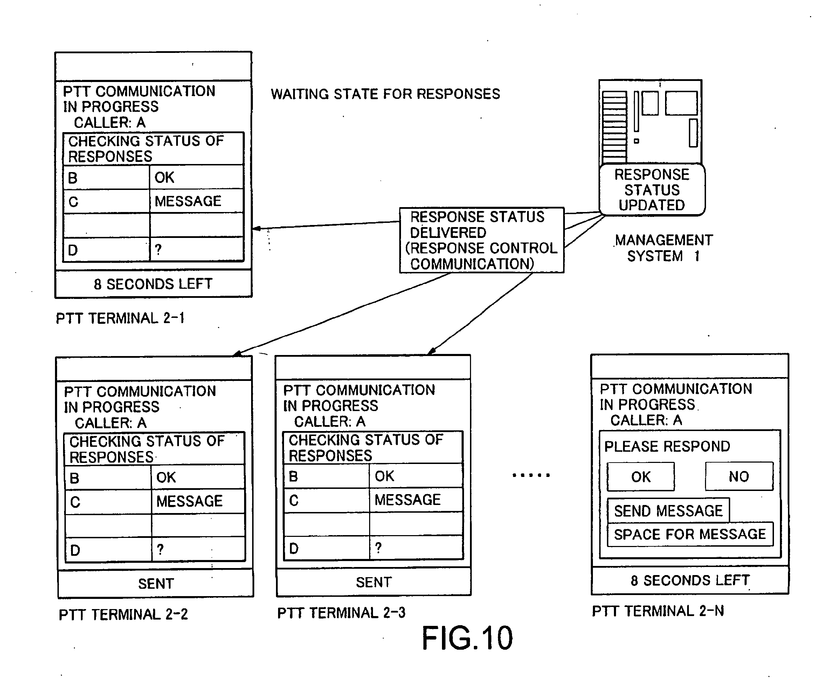

Upon receipt of the response control communications containing the response contents from the PTT terminals 2-2, 2-3, the management system 1 registers/updates the respective response contents in a response status table (not shown) of the response status storing unit 132 within the management system (A6 in FIG. 3, 404, 405 in FIG. 4). Then, the management system 1 delivers the current response status via the response control communication to the PTT terminal 2-1 that has originated the response request instruction and the PTT terminals 2-2, 2-3 that have already returned the response content (A7 in FIG. 3, 406 in FIG. 4 and FIG. 10). The registration/update operation in the response status table and the delivery of the response status are repeated in sequence each time the response content is received until the response time limit expires (the loop 404 to 407 -> 404 in FIG. 4). The PTT terminals 2-1 to 2-3 which received the response status from the management system 1 display the current response status on their display (A8-1 to 8-3 in FIG. 3, FIG. 10). At this time, for the response content with a character message, the character message itself is displayed. FIG. 10 shows an instance where the response status is being delivered from the management system 1. The display unit of the PTT terminal 2-1 that has originated the response request instruction shows the response contents sent by the PTT terminals 2-2, 2-3. The response content sent by the PTT terminal 2-3 is a character message, and thus the content of the message is shown. The remaining time of the response time limit is also shown. The display units of the PTT terminals 2-2, 2-3 that have already returned the response content also show the response contents so that the response contents from the other PTT terminal holders can be seen. On the other hand, the display unit of the PTT terminal 2-N which has not returned the response content yet shows a screen to prompt the holder for a response and an indication of the remaining time of the response time limit.

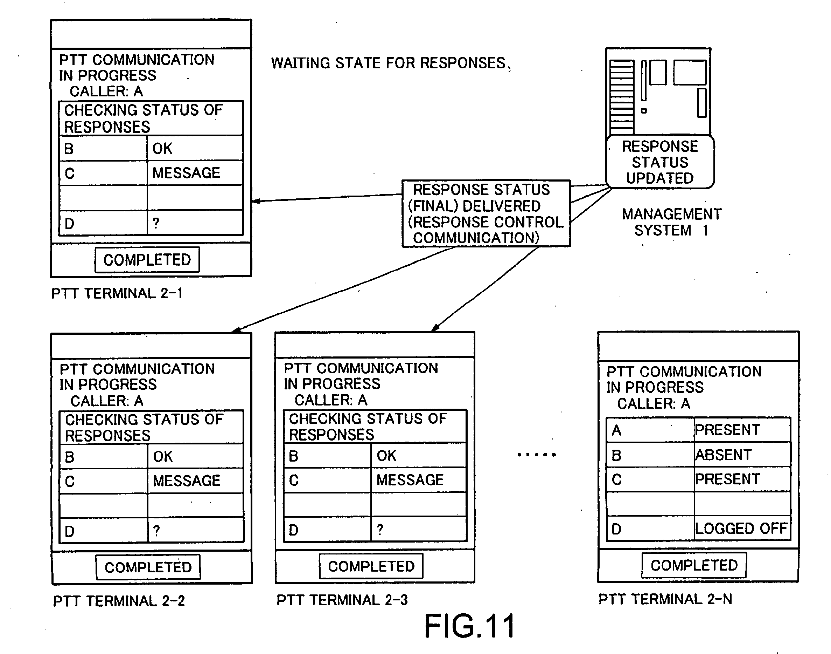

If the holder of the PTT terminal 2-N does not perform the response operation within the response time limit, a determination is made that the operation timed out within the management system 1, the response status within the system is updated as "no response" (A9 in FIG. 3), and the response status is sent to the PTT terminals 2-1 to 2-3 as the final result (A10 in FIG. 3, 407, 408 in FIG. 4, and FIG. 11). FIG. 11 shows an instance where, as a result of the expiration of the response time limit, the final result of the response status obtained within the response time limit is being delivered from the management system 1 to the PTT terminal 2-1 that has originated the response request instruction and to the PTT terminals 2-2, 2-3 that have returned the response content. The display unit of the PTT terminal 2-N that did not return the response content shows the presence of the parties concerned of the PTT communication, which is the initial screen.

In this way, the system according to this embodiment makes it possible to obtain responses from all the parties at once in a short time compared to the case where all the parties concerned of the PTT communication obtain a transmission privilege and respond by voice in turn on a one-by-one basis, as well as to visually identify the response status with ease.

A second embodiment of the present invention is now described below.

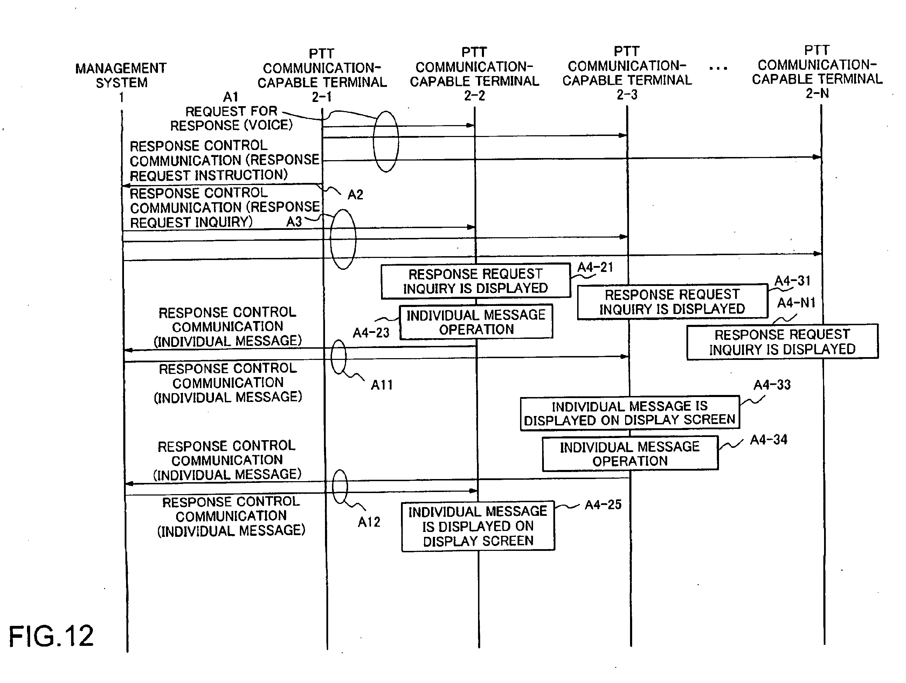

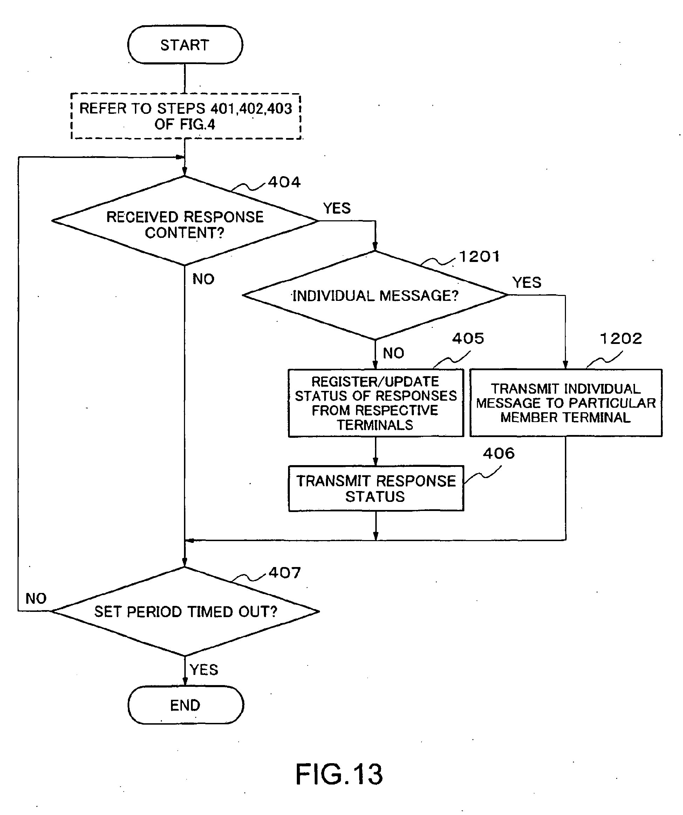

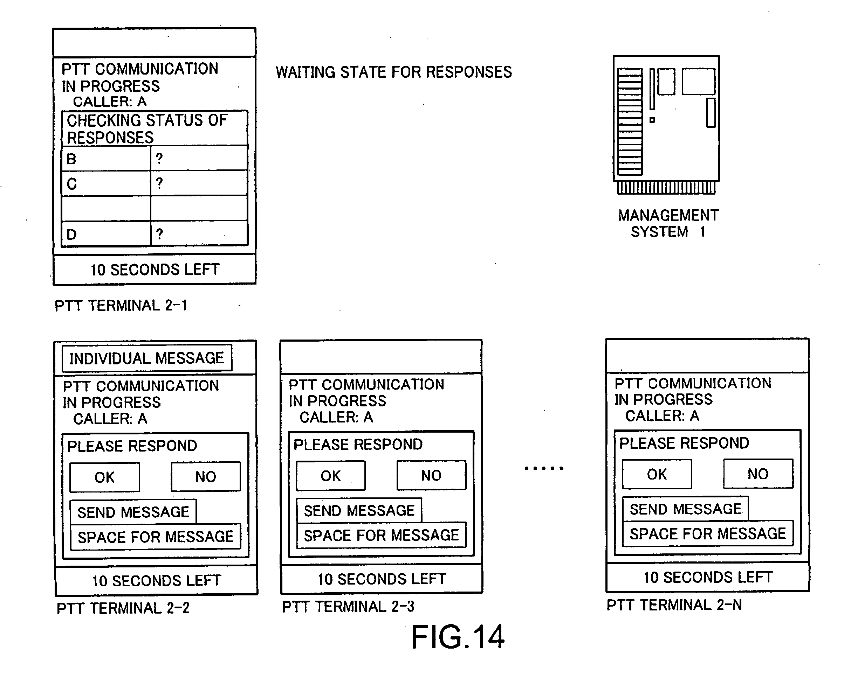

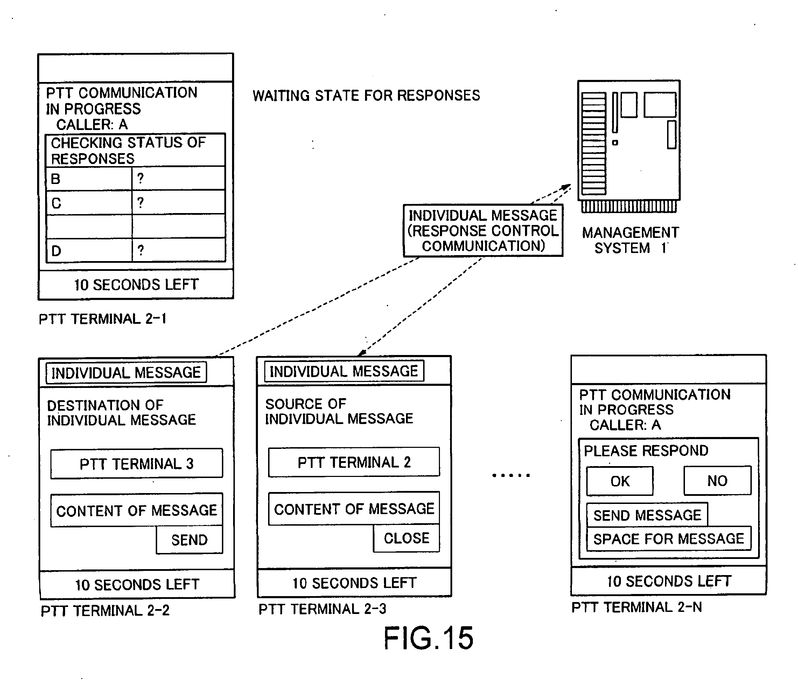

FIG. 12 is a sequence chart illustrating response status check operations for the PTT terminals 2-1 to 2-N in a character/data transmitting/receiving system according to the second embodiment of the present invention. FIG. 13 is a flow chart describing operations in a terminal management apparatus according to the second embodiment of the present invention. FIGS. 14 and 15 are example screen shots of the display units of the PTT terminals 2-1 to 2-N in the character/data transmitting/receiving system according to the second embodiment of the present invention. Reference is now made to FIG. 1, FIG. 2 and FIGS. 12 to 15 to describe the response status check operations for the PTT terminals 2-1 to 2-N in the character/data transmitting/receiving system according to the second embodiment of the present invention.

In the second embodiment of the present invention, a function is provided in which individual messages can be transmitted and received between particular members from the parties participating in the PTT communication. It is assumed in the description of this embodiment that individual messages are transmitted and received between the PTT terminal 2-2 and the PTT terminal 2-3. Note that the operations from the beginning to A4-21, A4-31 and A4-N1 in FIG. 12 are the same as those described above in connection with the first embodiment (FIG. 3) and the description of them will not be repeated here. Also, the process flow shown in FIG. 13 is almost the same as that in FIG. 4 described above in connection with the first embodiment, and thus FIG. 13 focuses on the part of the process flow specific to this embodiment. That means the steps 404, 405, 406 and 407 correspond to those in FIG. 4.

As described with regard to the first embodiment, when a response request instruction is originated from the PTT terminal 2-1, an indication that a response request inquiry has been made is displayed together with an indication of the response time limit on the display screens of the respective PTT terminals 2-2 to 2-N of the parties concerned of the PTT communication (A4-21, A4-31 and A4-N1 in FIG. 12). While the PTT terminals 2-2 to 2-N are being prompted for a response operation, the holder of the PTT terminal 2-2 depresses an "individual message" button to send an individual message (A4-23 in FIG. 12, FIG. 14). FIG. 14 shows an instance where the "individual message" button is displayed on the display unit of the PTT terminal 2-2.

When the "individual message" button is depressed, the display unit of the PTT terminal 2-2 is switched to an individual message sending operation screen. The holder of the PTT terminal 2-2 enters an individual message, specifies the PTT terminal 2-3 as the destination of the individual message and sends the individual message. The individual message is sent to the management system 1 via the response control communication and operations associated with the individual message sending/receiving operations are performed (A11 in FIG. 12, 1201, 1202 in FIG. 13).

That is, the management system 1 waiting for responses, upon receipt of a response via the response control communication (404 in FIG. 13: YES), determines whether the response is a response content in response to the response request inquiry or an individual message (1201 in FIG. 13). If the response is a response content in response to the response request inquiry (1201 in FIG. 13: NO), the operation of step 405 in FIG. 3 described above in connection with the first embodiment is performed. If the response is an individual message (1201 in FIG. 13: YES), the individual message is sent to the specified PTT terminal 2-3 via the response control communication (1202 in FIG. 13).

The display unit of the PTT terminal 2-3 that has received the individual message via the response control communication shows the individual message with an indication that its source is the PTT terminal 2-2 (A4-33 in FIG. 12, FIG. 15).

If the holder of the PTT terminal 2-3 wants to respond to the individual message from the PTT terminal 2-2, the holder of the PTT terminal 2-3 performs an individual message sending operation in the same way as described above (A4-34 in FIG. 12). The holder of the PTT terminal 2-3 specifies the PTT terminal 2-2 as the destination of the individual message and executes the sending operation for the individual message. The individual message of the PTT terminal 2-3 is sent to the management system 1 via the response control communication, and the management system 1, after receiving the response control communication, sends the individual message of the PTT terminal 2-3 to the PTT terminal 2-2 through the operation described above (A12 in FIG. 12). The display unit of the PTT terminal 2-2 that has received the individual message of the PTT terminal 2-3 via the response control communication displays the individual message received (A4-25 in FIG. 12). FIG. 15 shows the individual message display screens of the PTT terminals 2-2, 2-3, respectively. In FIG. 15, the PTT terminal 2-2 is sending an individual message directed to the PTT terminal 2-3, while the PTT terminal 2-3 is displaying the individual message received from the source, PTT terminal 2-2.

Accordingly, the system according to this embodiment, in addition to that it makes it possible to obtain responses from all the parties at once in a short time compared to the case where all the parties obtain a transmission privilege and respond by voice in turn on a one-by-one basis, as well as to visually identify the response status with ease, it also makes it possible to make preliminary arrangements by exchanging massages among particular parties.

A third embodiment of the present invention is now described.

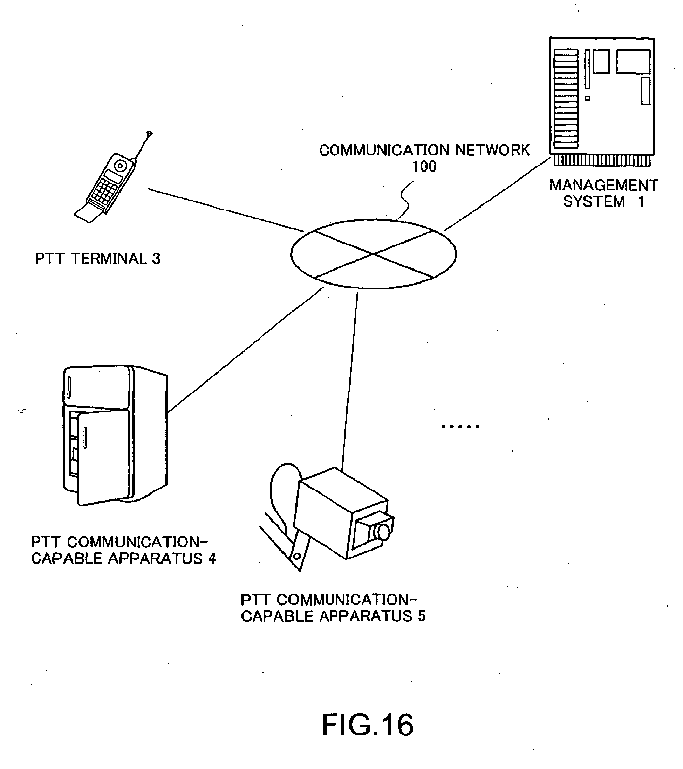

FIG. 16 is a block diagram illustrating a character/data transmitting/receiving system according to the third embodiment of the present invention.

The first and second embodiments of the present invention describe, person-to-person communications. In contrast, this embodiment is intended to perform person-to-apparatus communications and remotely control the apparatuses. In connection with the system shown in FIG. 1 to which the first and second embodiments are applied, examples were provided to illustrate communications from the holder of the PTT terminal 2-1 to the holders of the PTT terminals 2-2 to 2-N, which are entirely operated by persons through the PTT terminals. In connection with the system shown in FIG. 16 to which the third embodiment is applied, an example is provided to describe communications intended not for persons but for a plurality of apparatuses such as consumer electronics which are connected to a communication network 100 and provided with the PTT communication capability.

In the character/data transmitting/receiving system according to the third embodiment of the present invention in FIG. 16, a management system 1a, a PTT terminal 3, and PTT communication-capable apparatuses 4, 5, ... are connected through the communication network 100.

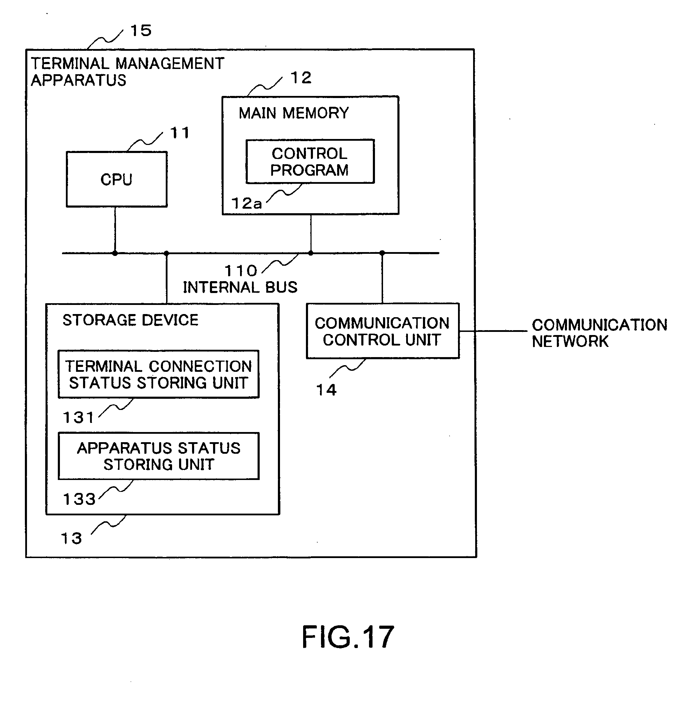

FIG. 17 is a block diagram illustrating the configuration of a terminal management apparatus according to the third embodiment of the present invention. The terminal management apparatus 15 shown in FIG. 17 is provided within the management system 1a shown in FIG. 16.

In FIG. 17, the terminal management apparatus 15 consists of a CPU (Central Processing Unit) 11, a main memory 12 that stores a control program 12a executed by the CPU 11, a storage device 13 used by the CPU 11 as a working area for executing the control program 12a, and a communication control unit 14 that controls communications between the PTT terminal 3 and the PTT communication-capable apparatuses 4, 5 ... through the communication network 100. The CPU 11, the main memory 12, the storage device 13 and the communication control unit 14 are interconnected via an internal bus 110.

The storage device 13 has a terminal connection status storing unit 131 that stores terminal connection status for managing the connections between the PTT terminal 3 and the PTT communication-capable apparatuses 4, 5 ... and their connection status, and an apparatus status storing unit 133 that stores the connection status and operating status of each of the PTT communication-capable apparatuses 4, 5 ....

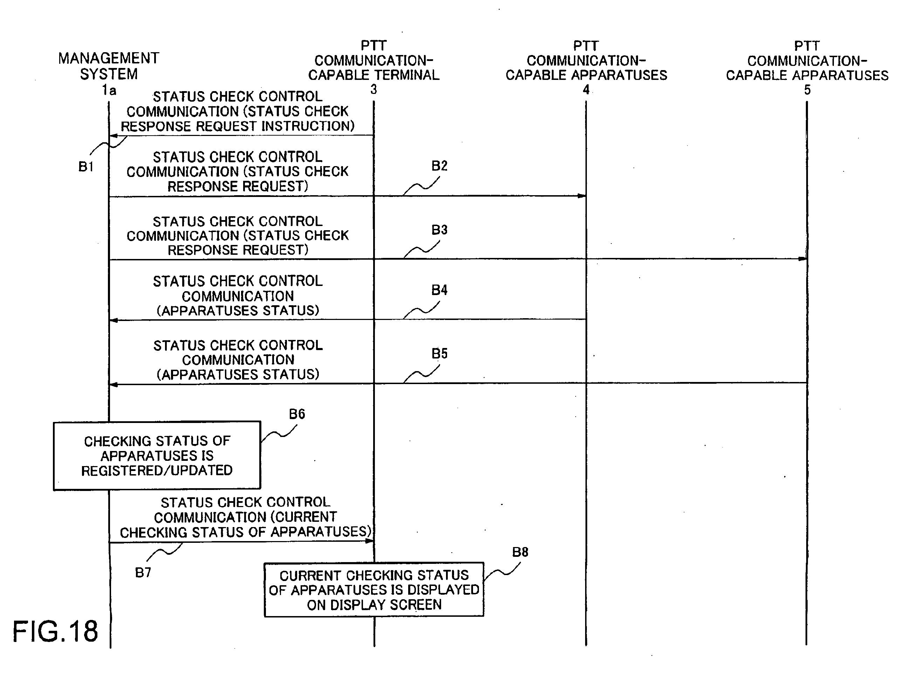

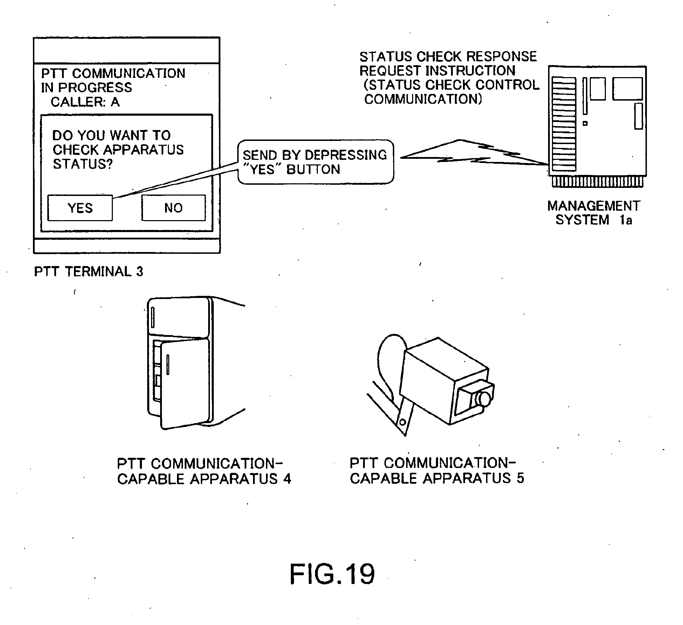

FIG. 18 is a sequence chart illustrating status check operations for the PTT communication-capable apparatuses 4, 5 ... in the character/data transmitting/receiving system according to the third embodiment of the present invention. FIGS. 19 to 22 illustrate the status check operations for the PTT communication-capable apparatuses 4, 5 ... in the character/data transmitting/receiving system according to the third embodiment of the present invention. Reference is nowmade to FIGS. 16 to 22 to describe the status check operations for the PTT communication-capable apparatuses 4, 5 ... in the character/data transmitting/receiving system according to the third embodiment of the present invention. Note that the operations of the management system 1a in FIG. 18 are achieved by the CPU 11 of the terminal management apparatus 15 shown in FIG. 17 executing the control program 12a.

The holder of the PTT terminal 3 who has been granted a speaking privilege performs a status check response request operation in order to check the status of the predetermined target apparatuses of the PTT communication. The status check response request operation performed at the PTT terminal 3 causes a status check response request instruction to be sent from the PTT terminal 3 to the management system 1a. This is carried out by means of status check control communication (B1 in FIG. 18, FIG. 19) which corresponds to the response control communication described above in connection with the first and the second embodiments. FIG. 19 shows an instance where a status check response request instruction is being transmitted to the management system 1a by depressing a "YES" button on an example status check response request operation screen of the PTT terminal 3.

Note that the response control communication described above in connection with the first and the second embodiments is referred to as status check control communication in the description of the third embodiment. The status check control communication is, as with the response control communication, a communication protocol used for mutual communications among the PTT terminals, the PTT communication-capable apparatuses and the management system 1a in the PTT communication. Thus, the PTT terminals, the PTT communication-capable apparatuses and the management system 1a are provided with control capability according to this communication protocol.

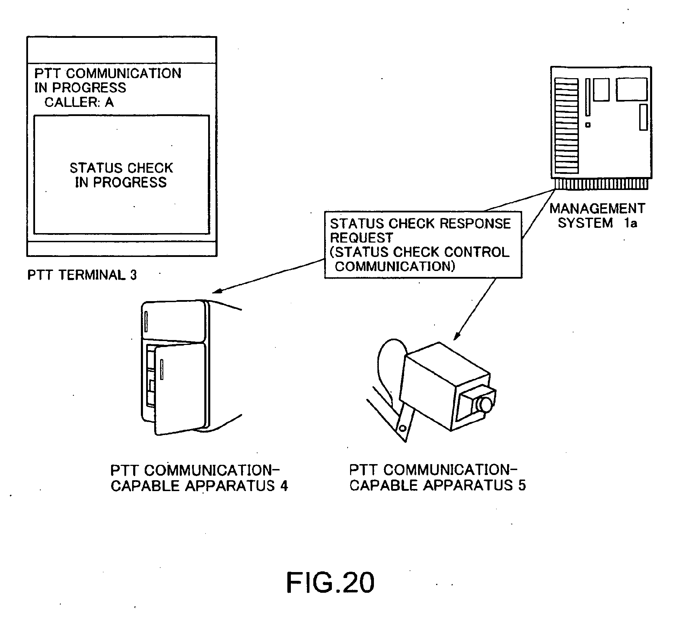

The management system 1a, upon receipt of the status check response request instruction from the PTT terminal 3, extracts the PTT communication-capable apparatuses 4, 5 associated with the PTT communication concerned with reference to the information of the terminal connection status storing unit 131 stored in the storage device 13 within the terminal management apparatus 15 in FIG. 17. Then, the management system 1a sends a status check response request to the PTT communication-capable apparatuses 4, 5 via the status check control communication (B2, B3 in FIG. 18, FIG. 20). At this time, a response time limit that defines a time limit for waiting for responses from the PTT communication-capable apparatuses 4, 5 is also specified. FIG. 20 shows an instance where the status check response request is being transmitted from the management system 1a to the PTT communication-capable apparatuses 4, 5 via the status check control communication. Also, the display unit of the PTT terminal 3 displays a waiting state indication of "STATUS CHECK IN PROGRESS."

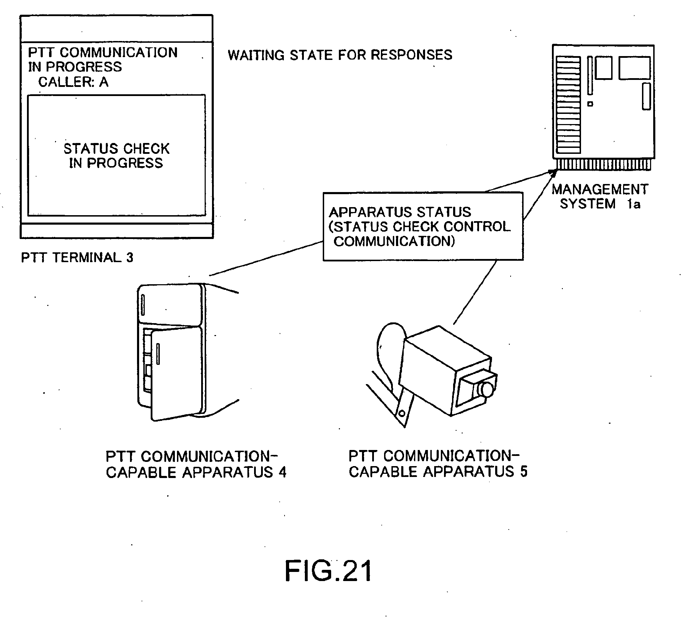

The PTT communication-capable apparatuses 4, 5 that have received the status check control communication, after identifying the content of the status check control communication and knowing that it is a status check response request, transmit the response content containing the status of their own to the management system 1a via the status check control communication (B4, B5 in FIG. 18, FIG. 21). FIG. 21 shows an instance where the response content (apparatus status) is being transmitted from each of the PTT communication-capable apparatuses 4, 5 to the management system 1a via the status check control communication.

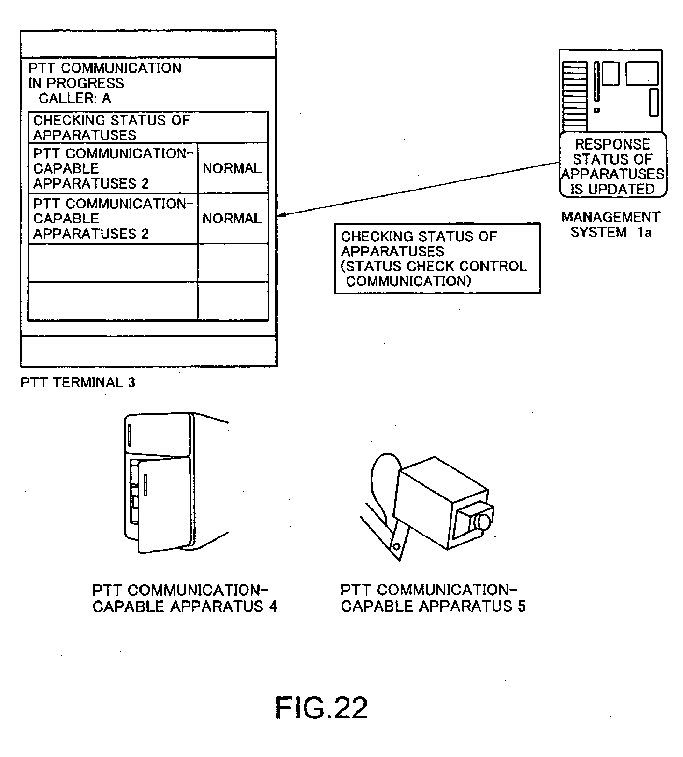

The management system 1a that has received the response contents (apparatus status) from the respective PTT communication-capable apparatuses 4, 5 registers/updates the information of the apparatus status storing unit 133 stored in the storage device 13 within the terminal management apparatus 15 in FIG. 17 based on the received response contents (apparatus status) (B6 in FIG. 18). Then, it transmits the current response status as "CHECKING STATUS" to the PTT terminal 3 via the status check control communication. The PTT terminal 3 that has received the checking status from the management system 1a displays the current checking status of the respective apparatuses on the display unit (B7, B8 in FIG. 18, FIG. 22). FIG. 22 shows an instance where the checking status has been transmitted from the management system 1a to the PTT terminal 3 and the checking status is displayed on the display unit of the PTT terminal 3.

Then, when the response time limit is reached, the checking status of the PTT communication-capable apparatuses that have returned the response content within the response time limit is displayed on the display unit of the PTT terminal 3 and an indication of "NO RESPONSE" is displayed for the PTT communication-capable apparatuses that have not responded.

While the control for checking the status of the PTT communication-capable apparatuses has been discussed in the above description, it is also possible to cause the PTT communication-capable apparatuses to carry out controls such as power on/off, diagnostics, camera operations, or any other controls and to report the result by defining and using the control contents specified by the control instructions and control requests in the response control communication (status check control communication) as appropriate.

In this way, this embodiment has been described using an example of the remote control of the PTT communication-capable apparatuses, it is also possible to introduce an application which applies similar operations to services (auction, securities trading, etc.) deployed on a network such as the Internet. This may be achieved by defining control instructions and control requests appropriate for services to be applied in the communication protocol of the response control communication described with respect to the first to third embodiments. By doing so, the present invention may be applied to an application which transmits response requests corresponding to those services and collects result reports in response to the requests.

Accordingly, in this embodiment, communications can be directed to apparatuses or services deployed on a network instead of persons.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

## Claims

1. A character/data transmitting/receiving system (1) including a plurality of communication terminals capable of a group communication service and a terminal management apparatus (10) for managing said communication terminals,
wherein each of said communication terminals comprising:
a response control communication processing unit adapted to make a response request, which includes a response time limit for defining a period of time within which responses are accepted, and to respond to the response request using response control communication according to a communication protocol of the group communication service; and
wherein said terminal management apparatus (10) comprising:
a response request processing unit which, in response to a response request from any of said communication terminals using the response control communication, is adapted to broadcast the response request to other communication terminals participating in the group communication service using the response control communication;
a response collection processing unit adapted to receive and to collect responses to the response request, wherein the response content to the response request is data in a predetermined format or an arbitrary character message, from said other communication terminals using the response control communication;
a response status storing unit (132) adapted to store the responses collected at said response collection processing unit;
an update processing unit adapted to update the content of said response status storing unit based on the responses collected at said response collection processing unit within the response time limit,
a delivery processing unit adapted to deliver content of said response status storing unit to said communication terminal which transmitted the response request, when the response time limit expires,
**characterised in that**
any of said communication terminals which received the response request is adapted to transmit and receive messages to/from any of said other communication terminals which received the response request using the response control communication before returning a response to the response request.

2. The character/data transmitting/receiving system according to claim 1, wherein each of said communication terminals is adapted to perform the group communication service using Push-to-Talk communication.

3. The character/data transmitting/receiving system according to claim 1 or 2,
wherein said communication terminals include an apparatus having a response control unit adapted to perform a response control in response to a response request using the response control communication, and
wherein said apparatus which received the response request is adapted to execute a control defined by the received response request and to return the execution result in response.

4. A terminal management apparatus for managing communication terminals capable of response control communication according to a communication protocol of a group communication service, comprising:
a response request processing unit which, in response to a response request, which includes a response time limit for defining a period of time within which responses are accepted, from any of said communication terminals using the response control communication, is adapted to broadcast the response request to other communication terminals participating in the group communication service using the response control communication;
a response collection processing unit adapted to receive and to collect responses to the response request, wherein the response content to the response request is data in a predetermined format or an arbitrary character message, from said other communication terminals using the response control communication; and
a response status storing unit adapted to store the responses collected at said response collection processing unit;
an update processing unit adapted to update the content of said response status storing unit based on the responses collected at said response collection processing unit within the response time limit,
a delivery processing unit adapted to deliver content of said response status storing unit to said communication terminal which transmitted the response request, when the response time limit expires;
response content identification means for, upon receipt of a response transmitted from said communication terminal which received the response request, identifying whether the content of the response is a response to the response request or an individual message to be transmitted to any of said other communication terminals which received the response request; **characterised by**
individual message transmission means for, when the response content is identified as an individual message at said response content identification means, transmitting the individual message to said communication terminal of the specified destination before a response to the response request is returned by said communication terminal.

5. The apparatus according to claim 4,
wherein said communication terminals include an apparatus having a response control unit adapted to perform a response control in response to a response request using the response control communication, and
wherein the response content in response to the response request is a result of executing a control defined in the response request by the device.

6. A character/data transmitting/receiving method used in a system including communication terminals capable of response control communication according to a communication protocol of a group communication service and a terminal management apparatus for managing said communication terminals, comprising:
a response request processing step of, in response to a response request, which includes a response time limit for defining a period of time within which responses are accepted, from any of said communication terminals using the response control communication, broadcasting the response request to other communication terminals participating in the group communication service using the response control communication;
a response collection processing step of receiving and collecting responses to the response request, wherein the response content to the response request is data in a predetermined format or an arbitrary character message, from said other communication terminals using the response control communication;
a response status storing step of storing the response contents collected in said response collection processing step;
an update processing step of updating the response contents stored in said response status storing step based on the responses collected in said response collection processing step within the response time limit;
a delivery processing step of delivering the responses collected in said response collection processing step to said communication terminal which transmitted the response request;
a response content identification step of, after said response request processing step, upon receipt of a response transmitted from said communication terminal which received the response request, identifying whether the content of the response is a response to the response request or an individual message to be transmitted to any of said other communication terminals which received the response request; **characterised by**
an individual message transmission step of, when the response content is identified as an individual message in said response content identification step, transmitting the individual message to said communication terminal of the specified destination before a response to the response request is returned by said communication terminal.

7. The character/data transmitting/receiving method according to claim 6,
wherein the response request includes a response time limit which defines a period of time within which responses are accepted,
further comprising
a second delivery processing step of delivering the response contents updated in said update processing step to said communication terminal that transmitted the response request when the response time limit expires.

8. The method according to claim 7,
wherein said communication terminals include an apparatus which performs a response control in response to a response request using the response control communication, and
wherein the response content in response to the response request is a result of executing a control defined in the response request by the apparatus.

## Patentansprüche

1. Zeichen-/Datenübertragungs/-empfangssystem (1) mit mehreren Kommunikationsendgeräten, die dazu geeignet sind, einen Gruppenkommunikationsdienst auszuführen, und mit einer Endgerätmanagementvorrichtung (10) zum Managen der Kommunikationsendgeräte,
wobei jedes der Kommunikationsendgeräte aufweist:
eine Antwortsteuerungskommunikationsverarbeitungseinheit, die dazu geeignet ist, eine Antwortanforderung zu erzeugen, die eine Antwortzeitgrenze zum Definieren einer Zeitdauer enthält, innerhalb der Antworten akzeptiert werden, und auf die Antwortanforderung unter Verwendung einer Antwortsteuerungskommunikation gemäß einem Kommunikationsprotokoll des Gruppenkommunikationsdienstes zu antworten, und
wobei die Endgerätmanagementvorrichtung (10) aufweist:
eine Antwortanforderungsverarbeitungseinheit, die dazu geeignet ist, in Antwort auf eine Antwortanforderung von irgendeinem der Kommunikationsendgeräte unter Verwendung der Antwortsteuerungskommunikation die Antwortanforderung unter Verwendung der Antwortsteuerungskommunikation an andere Kommunikationsendgeräte zu übertragen, die am Gruppenkommunikationsdienst teilnehmen;
eine Antwortsammelverarbeitungseinheit, die dazu geeignet ist, Antworten auf eine Antwortanforderung von den anderen Kommunikationsendgeräten unter Verwendung der Antwortsteuerungskommunikation zu empfangen und zu sammeln, wobei der Inhalt der Antwort auf die Antwortanforderung Daten in einem vorgegebenen Format oder eine Nachricht mit beliebigen Zeichen darstellt;
eine Antwortstatusspeichereinheit (132), die dazu geeignet ist, die an der Antwortsammelverarbeitungseinheit gesammelten Antworten zu speichern;
eine Aktualisierungsverarbeitungseinheit, die dazu geeignet ist, den Inhalt der Antwortstatusspeichereinheit basierend auf den an der Antwortsammelverarbeitungseinheit innerhalb der Antwortzeitgrenze gesammelten Antworten zu aktualisieren;
eine Übermittlungsverarbeitungseinheit, die dazu geeignet ist, den Inhalt der Antwortstatusspeichereinheit an das Kommunikationsendgerät zu übermitteln, das die Antwortanforderung übertragen hat, wenn die Antwortzeitgrenze abgelaufen ist;
**dadurch gekennzeichnet, dass**
jedes der Kommunikationsendgeräte, das die Antwortanforderung empfangen hat, dazu geeignet ist, Nachrichten an ein beliebiges der anderen Kommunikationsendgeräte, das die Antwortanforderung empfangen hat, unter Verwendung der Antwortsteuerungskommunikation zu übertragen oder davon zu empfangen, bevor es eine Antwort auf die Antwortanforderung zurücksendet.

2. System nach Anspruch 1, wobei jedes der Kommunikationsendgeräte dazu geeignet ist, den Gruppenkommunikationsdienst unter Verwendung einer Push-to-Talk-Kommunikation auszuführen.

3. System nach Anspruch 1 oder 2,
wobei die Kommunikationsendgeräte eine Einrichtung mit einer Antwortsteuerungseinheit aufweisen, die dazu geeignet ist, in Antwort auf eine Antwortanforderung eine Antwortsteuerung unter Verwendung der Antwortsteuerungskommunikation auszuführen,
wobei die Einrichtung, die die Antwortanforderung empfangen hat, dazu geeignet ist, eine durch die empfangene Antwortanforderung definierte Steuerung auszuführen und anschließend das Ausführungsergebnis zurückzusenden.

4. Endgerätmanagementvorrichtung zum Managen von Kommunikationsendgeräten, die dazu geeignet sind, eine Antwortsteuerungskommunikation gemäß einem Kommunikationsprotokoll eines Gruppenkommunikationsdienst auszuführen, mit:
einer Antwortanforderungsverarbeitungseinheit, die in Antwort auf eine Antwortanforderung, die eine Antwortzeitgrenze zum Definieren einer Zeitdauer enthält, innerhalb der Antworten von irgendeinem der Kommunikationsendgeräte unter Verwendung der Antwortsteuerungskommunikation akzeptiert werden, dazu geeignet ist, die Antwortanforderung unter Verwendung der Antwortsteuerungskommunikation an andere Kommunikationsendgeräte zu übertragen, die am Gruppenkommunikationsdienst teilnehmen;
einer Antwortsammelverarbeitungseinheit, die dazu geeignet ist, Antworten auf die Antwortanforderung von den anderen Kommunikationsendgeräten unter Verwendung der Antwortsteuerungskommunikation zu empfangen und zu sammeln, wobei der Inhalt der Antwort auf die Antwortanforderung Daten in einem vorgegebenen Format oder eine Nachricht mit beliebigen Zeichen darstellt;
einer Antwortstatusspeichereinheit, die dazu geeignet ist, die an der Antwortsammelverarbeitungseinheit gesammelten Antworten zu speichern;
einer Aktualisierungsverarbeitungseinheit, die dazu geeignet ist, den Inhalt der Antwortstatusspeichereinheit basierend auf den an der Antwortsammelverarbeitungseinheit innerhalb der Antwortzeitgrenze gesammelten Antworten zu aktualisieren;
einer Übermittlungsverarbeitungseinheit, die dazu geeignet ist, den Inhalt der Antwortstatusspeichereinheit an das Kommunikationsendgerät zu übermitteln, das die Antwortanforderung übertragen hat, wenn die Antwortzeitgrenze abgelaufen ist; und
einer Antwortinhaltidentifizierungseinrichtung, die nach dem Empfang einer Antwort, die von dem Kommunikationsendgerät übertragen wird, das die Antwortanforderung empfangen hat, identifiziert, ob der Inhalt der Antwort eine Antwort auf die Antwortanforderung oder eine individuelle Nachricht ist, die an irgendeines der anderen Kommunikationsendgeräte übertragen werden soll, das die Antwortanforderung empfangen hat;
**gekennzeichnet durch**
eine Einrichtung zum Übertragen einer individuellen Nachricht, die, wenn der Antwortinhalt an der Antwortinhaltidentifizierungseinrichtung als eine individuelle Nachricht identifiziert wird, die individuelle Nachricht an das . Kommunikationsendgerät eines spezifizierten Ziels überträgt, bevor das Kommunikationsendgerät eine Antwort auf die Antwortanforderung zurücksendet.

5. Vorrichtung nach Anspruch 4,
wobei die Kommunikationsendgeräte eine Einrichtung mit einer Antwortsteuerungseinheit aufweisen, die dazu geeignet ist, in Antwort auf eine Antwortanforderung unter Verwendung der Antwortsteuerungskommunikation eine Antwortsteuerung auszuführen, und
wobei der Inhalt der Antwort auf die Antwortanforderung ein Ergebnis der Ausführung einer in der Antwortanforderung definierten Steuerung ist.

6. Zeichen-/Datenübertragungs/-empfangsverfahren, das in einem System ausgeführt wird, das Kommunikationsendgeräte aufweist, die dazu geeignet sind, eine Antwortsteuerungskommunikation gemäß einem Kommunikationsprotokoll eines Gruppenkommunikationsdienstes auszuführen, und eine Endgerätmanagementvorrichtung zum Managen der Kommunikationsendgeräte, mit:
einem Antwortanforderungsverarbeitungsschritt, in dem in Antwort auf eine Antwortanforderung, die eine Antwortzeitgrenze zum Definieren einer Zeitdauer enthält, innerhalb der Antworten von irgendeinem der Kommunikationsendgeräte unter Verwendung der Antwortsteuerungskommunikation akzeptiert werden, die Antwortanforderung unter Verwendung der Antwortsteuerungskommunikation an andere Kommunikationsendgeräte übertragen wird, die an dem Gruppenkommunikationsdienst teilnehmen;
einem Antwortsammelverarbeitungsschritt, in dem Antworten auf die Antwortanforderung von den anderen Kommunikationsendgeräten unter Verwendung der Antwortsteuerungskommunikation empfangen und gesammelt werden, wobei der Inhalt der Antwort auf die Antwortanforderung Daten in einem vorgegebenen Format oder eine Nachricht mit beliebigen Zeichen darstellt;
einem Antwortstatusspeicherschritt zum Speichern der im Antwortsammelverarbeitungsschritt gesammelten Antwortinhalte;
einem Aktualisierungsverarbeitungsschritt zum Aktualisieren der Antwortinhalte, die im Antwortstatusspeicherschritt basierend auf den innerhalb der Antwortzeitgrenze gesammelten Antworten gespeichert werden;
einem Übermittlungsverarbeitungsschritt zum Übermitteln der im Antwortsammelverarbeitungsschritt gesammelten Antworten zum Kommunikationsendgerät, das die Antwortanforderung übertragen hat;
einem Antwortinhaltidentifizierungsschritt, in dem, nach dem Antwortanforderungsverarbeitungsschritt nach dem Empfang einer Antwort, die von dem Kommunikationsendgerät übertragen wird, das die Antwortanforderung empfangen hat, identifiziert wird, ob der Inhalt der Antwort eine Antwort auf die Antwortanforderung oder eine individuelle Nachricht ist, die an irgendeines der anderen Kommunikationsendgeräte übertragen werden soll, das die Antwortanforderung empfangen hat;
**gekennzeichnet durch**
einen Schritt zum Übertragen einer individuellen Nachricht, in dem, wenn der Antwortinhalt im Antwortinhaltidentifizierungsschritt als eine individuelle Nachricht identifiziert wird, die individuelle Nachricht an das Kommunikationsendgerät eines spezifizierten Ziels übertragen wird, bevor das Kommunikationsendgerät eine Antwort auf die Antwortanforderung zurücksendet.

7. Verfahren nach Anspruch 6, wobei die Antwortanforderung eine Antwortzeitgrenze enthält, die eine Zeitdauer definiert, innerhalb der Antworten akzeptiert werden;
ferner mit einem zweiten Übermittlungsverarbeitungsschritt zum Übermitteln der im Aktualisierungsverarbeitungsschritt aktualisierten Antwortinhalte an das Kommunikationsendgerät, das die Antwortanforderung übertragen hat, wenn die Antwortzeitgrenze abgelaufen ist.

8. Verfahren nach Anspruch 7,
wobei die Kommunikationsendgeräte eine Einrichtung aufweisen, die in Antwort auf eine Antwortanforderung eine Antwortsteuerung unter Verwendung der Antwortsteuerungskommunikation ausführen; und
wobei der Inhalt der Antwort auf die Antwortanforderung ein Ergebnis der Ausführung einer in der Antwortanforderung definierten Steuerung durch die Einrichtung ist.

## Revendications

1. Système d'émission/réception de caractères/données (1) comprenant une pluralité de terminaux de communication capables de fournir un service de communication de groupe et un appareil de gestion de terminaux (10) pour gérer lesdits terminaux de communication,
dans lequel chacun desdits terminaux de communication comprend :
une unité de traitement de communication de contrôle de réponse conçue pour effectuer une demande de réponse, qui comprend une limite de temps de réponse pour définir une période de temps pendant laquelle des réponses sont acceptées, et pour répondre à la demande de réponse en utilisant une communication de contrôle de réponse conformément à un protocole de communication du service de communication de groupe ; et
dans lequel ledit appareil de gestion de terminaux (10) comprend :
une unité de traitement de demande de réponse qui, en réponse à une demande de réponse provenant de l'un quelconque desdits terminaux de communication utilisant la communication de contrôle de réponse, est conçue pour diffuser la demande de réponse vers d'autres terminaux de communication participant au service de communication de groupe en utilisant la communication de contrôle de réponse ;
une unité de traitement de collecte de réponse conçue pour recevoir et pour collecter les réponses à la demande de réponse, dans lequel le contenu de réponse à la demande de réponse consiste en des données dans un format prédéterminé ou en un message de caractères arbitraires, desdits autres terminaux de communication utilisant la communication de contrôle de réponse ;
une unité de mémorisation d'état de réponse (132) conçue pour mémoriser les réponses collectées au niveau de ladite unité de traitement de collecte de réponse ;
une unité de traitement de mise à jour conçue pour mettre à jour le contenu de ladite unité de mémorisation d'état de réponse sur la base des réponses collectées au niveau de ladite unité de traitement de collecte de réponse dans la limite de temps de réponse,
une unité de traitement de distribution conçue pour délivrer le contenu de ladite unité de mémorisation d'état de réponse au dit terminal de communication qui a transmis la demande de réponse, lorsque la limite de temps de réponse est atteinte,
**caractérisé en ce que**
l'un quelconque desdits terminaux de communication qui a reçu la demande de réponse est conçu pour émettre et recevoir des messages vers/de l'un quelconque desdits autres terminaux de communication qui a reçu la demande de réponse en utilisant la communication de contrôle de réponse avant de renvoyer une réponse à la demande de réponse.

2. Système d'émission/réception de caractères/données selon la revendication 1, dans lequel chacun desdits terminaux de communication est conçu pour effectuer le service de communication de groupe en utilisant une communication Push-to-Talk.

3. Système d'émission/réception de caractères/données selon la revendication 1 ou 2,
dans lequel lesdits terminaux de communication comprennent un appareil comportant une unité de contrôle de réponse conçue pour effectuer un contrôle de réponse en réponse à une demande de réponse en utilisant la communication de contrôle de réponse, et
dans lequel ledit appareil qui a reçu la demande de réponse est conçu pour effectuer un contrôle défini par la demande de réponse reçue et pour renvoyer le résultat d'exécution en réponse.

4. Appareil de gestion de terminaux pour gérer des terminaux de communication capables d'effectuer une communication de contrôle de réponse conformément à un protocole de communication d'un service de communication de groupe, comprenant :
une unité de traitement de demande de réponse qui, en réponse à une demande de réponse, qui comprend une limite de temps de réponse pour définir une période de temps pendant laquelle des réponses sont acceptées, provenant de l'un quelconque desdits terminaux de communication utilisant la communication de contrôle de réponse, est conçue pour diffuser la demande de réponse vers d'autres terminaux de communication participant au service de communication de groupe en utilisant la communication de contrôle de réponse ;
une unité de traitement de collecte de réponse conçue pour recevoir et pour collecter les réponses à la demande de réponse, dans lequel le contenu de réponse à la demande de réponse consiste en des données dans un format prédéterminé ou en un message de caractères arbitraires, desdits autres terminaux de communication utilisant la communication de contrôle de réponse ; et
une unité de mémorisation d'état de réponse conçue pour mémoriser les réponses collectées au niveau de ladite unité de traitement de collecte de réponse ;
une unité de traitement de mise à jour conçue pour mettre à jour le contenu de ladite unité de mémorisation d'état de réponse sur la base des réponses collectées au niveau de ladite unité de traitement de collecte de réponse dans la limite de temps de réponse,
une unité de traitement de distribution conçue pour délivrer le contenu de ladite unité de mémorisation d'état de réponse au dit terminal de communication qui a transmis la demande de réponse, lorsque la limite de temps de réponse est atteinte ;
des moyens d'identification de contenu de réponse pour, lors de la réception d'une réponse transmise par ledit terminal de communication qui a reçu la demande de réponse, identifier si le contenu de la réponse est une réponse à la demande de réponse ou un message individuel à transmettre à l'un quelconque desdits autres terminaux de communication qui a reçu la demande de réponse ; **caractérisé par**
des moyens de transmission de messages individuels pour, lorsque le contenu de réponse est identifié en tant que message individuel au niveau desdits moyens d'identification de contenu de réponse, transmettre le message individuel au dit terminal de communication de la destination spécifiée avant qu'une réponse à la demande de réponse soit renvoyée par ledit terminal de communication.

5. Appareil selon la revendication 4,
dans lequel lesdits terminaux de communication comprennent un appareil comportant une unité de contrôle de réponse conçue pour effectuer un contrôle de réponse en réponse à une demande de réponse en utilisant la communication de contrôle de réponse, et
dans lequel le contenu de réponse en réponse à la demande de réponse est un résultat d'exécution d'un contrôle défini dans la demande de réponse par le dispositif.

6. Procédé d'émission/réception de caractères/données utilisé dans un système comprenant des terminaux de communication capables d'effectuer une communication de contrôle de réponse conformément à un protocole de communication d'un service de communication de groupe et un appareil de gestion de terminaux pour gérer lesdits terminaux de communication, comprenant :
une étape de traitement de demande de réponse pour, en réponse à une demande de réponse, qui comprend une limite de temps de réponse pour définir une période de temps pendant laquelle des réponses sont acceptées, provenant de l'un quelconque desdits terminaux de communication utilisant la communication de contrôle de réponse, diffuser la demande de réponse vers d'autres terminaux de communication participant au service de communication de groupe en utilisant la communication de contrôle de réponse ;
une étape de traitement de collecte de réponse pour recevoir et collecter les réponses à la demande de réponse, dans lequel le contenu de réponse à la demande de réponse consiste en des données dans un format prédéterminé ou en un message de caractères arbitraires, desdits autres terminaux de communication utilisant la communication de contrôle de réponse ;
une étape de mémorisation d'état de réponse pour mémoriser les contenus de réponse collectés à ladite étape de traitement de collecte de réponse ;
une étape de traitement de mise à jour pour mettre à jour les contenus de réponse mémorisés à ladite étape de mémorisation d'état de réponse sur la base des réponses collectées à ladite étape de traitement de collecte de réponse dans la limite de temps de réponse ;
une étape de traitement de distribution pour délivrer les réponses collectées à ladite étape de traitement de collecte de réponse au dit terminal de communication qui a transmis la demande de réponse ;
une étape d'identification de contenu de réponse pour, après ladite étape de traitement de demande de réponse, lors de la réception d'une réponse transmise par ledit terminal de communication qui a reçu la demande de réponse, identifier si le contenu de la réponse est une réponse à la demande de réponse ou un message individuel à transmettre à l'un quelconque desdits autres terminaux de communication qui a reçu la demande de réponse ; **caractérisé par**
une étape de transmission de message individuel pour, lorsque le contenu de réponse est identifié en tant que message individuel à ladite étape d'identification de contenu de réponse, transmettre le message individuel au dit terminal de communication de la destination spécifiée avant qu'une réponse à la demande de réponse soit renvoyée par ledit terminal de communication.

7. Procédé d'émission/réception de caractères/données selon la revendication 6,
dans lequel la demande de réponse comprend une limite de temps de réponse qui définit une période de temps pendant laquelle des réponses sont acceptées,
comprenant en outre :
une deuxième étape de traitement de distribution pour délivrer les contenus de réponse mis à jour à ladite étape de traitement de mise à jour au dit terminal de communication qui a transmis la demande de réponse lorsque la limite de temps de réponse est atteinte.

8. Procédé selon la revendication 7,
dans lequel lesdits terminaux de communication comprennent un appareil qui effectue un contrôle de réponse en réponse à une demande de réponse en utilisant la communication de contrôle de réponse, et
dans lequel le contenu de réponse en réponse à la demande de réponse est un résultat d'exécution d'un contrôle défini dans la demande de réponse par l'appareil.
